Europäisches Patentamt

European Patent Office

Office européen des brevets

(19)

(11) Veröffentlichungsnummer: **0 219 556**
**B1**

(12) **EUROPÄISCHE PATENTSCHRIFT**

(45) Veröffentlichungstag der Patentschrift:
03.01.90

(51) Int. Cl.⁴: **F16B 13/00**

(21) Anmeldenummer: **85112934.6**

(22) Anmeldetag: **11.10.85**

(54) Unterkonstruktionsausgleichsschraube.

(43) Veröffentlichungstag der Anmeldung:
**29.04.87 Patentblatt 87/18**

(45) Bekanntmachung des Hinweises auf die Patenterteilung:
**03.01.90 Patentblatt 90/1**

(84) Benannte Vertragsstaaten:
**AT CH FR GB IT LI SE**

(56) Entgegenhaltungen:
**EP-A- 0 122 368**
**EP-A- 0 144 503**
**DE-A- 3 047 902**
**DE-A- 3 310 321**
**DE-B- 1 962 465**
**DE-U- 8 412 344**
**US-A- 2 024 071**
**US-A- 4 186 645**

(73) Patentinhaber: **ROTAN GmbH Holztechnik, Am Steinbruch 7, D-8121 Polling(DE)**

(72) Erfinder: **Rosner, Wolfgang, Josephsburgstrasse 73a, D-8000 München 80(DE)**

(74) Vertreter: **Lorenz, Eduard et al, Rechtsanwälte Eduard Lorenz - Bernhard Seidler Margrit Seidler - Dipl.-Ing. Hans-K. Gossel Dr. Ina Philipps - Dr. Paul B. Schäuble Dr. Siegfried Jackermeier, Widenmayerstrasse 23 D-8000 München 22(DE)**

## Beschreibung

Die Erfindung betrifft eine Schraube zur justierbaren Befestigung eines Elementes einer Unterkonstruktion o.dgl. an Wänden oder Decken nach dem Oberbegriff des Patentanspruchs 1.

Derartige sogenannte Unterkonstruktionsausgleichsschrauben dienen dazu, Latten einer Unterkonstruktion, auf die eine Paneel- oder Profilholzverkleidung aufgenagelt oder in sonstiger Weise befestigt wird, in justierbarer Weise an Wänden oder Decken zu befestigen und sind in unterschiedlichen Ausführungsformen bekannt.

Aus der europäischen Patentveröffentlichung 72 965 ist eine Schraubbefestigung bekannt, bei der eine Senkholzschraube mit einem Dübel in eine Bohrung der Decke oder Wand eingeschraubt ist und ihrem gewindefreien Teil eine Bohrung der zu befestigenden Latte durchsetzt, wobei der kegelstumpfförmige Kopf in einer die Bohrung stufenartig erweiternden Bohrung größeren Durchmessers angeordnet und in dieser durch eine aufgeschraubte Scheibe gehalten ist, die mit einem mittleren Loch versehen ist, dessen Durchmesser kleiner ist als der Durchmesser des Schraubenkopfes. Der Schlitz des Schraubenkopfes läßt sich durch das Loch der Scheibe mit einem Schraubenzieher erreichen, so daß sich der Abstand der Latte zu der Decke oder Wand durch Längs- oder Rechtsdrehen der Schraube verändern läßt.

Bei einer aus der DE-A 2 712 670 bekannten Schraube der eingangs angegebenen Art faßt ein buchsenförmiges Teil den oberen Teil des Schafts und den Schraubenkopf derart ein, daß es dessen Oberseite mit einem ringförmigen Bund übergreift. Dieses buchsenförmige Teil besteht aus elastischem Material und muß zuvor in eine Bohrung der Latte derart eingedrückt werden, daß es sich auf den Bohrungsrändern mit flanschförmigen Teilen abstützt und durch diese in der Bohrung axial unverschieblich festgelegt ist. Die Schraube wird anschließend durch das derart vormontierte buchsenförmige Teil hindurchgedrückt, daß der ringbundförmige Teil haltend über den Schraubenkopf schnappt. Bei dieser bekannten Schraube ist nicht nur die Montage kompliziert, der Schraubenkopf ragt zusätzlich auch mit dem äußeren Ende des buchsenförmigen Teils über die Lattenunterkonstruktion hinaus.

Weiterhin sind Unterkonstruktionsschrauben bekannt, bei denen buchsenförmige Teile die Schraubenköpfe drehbar aber axial unverschieblich einfassen, die mit einer Riffelung auf ihrer Außenseite versehen sind und die in verbreiterten abgesetzten Bohrungen der Latten derart versenkt angeordnet sind, daß sie nicht über die Lattenoberseite hinausragen. Auch diese bekannten Unterkonstruktionsausgleichsschrauben weisen den Nachteil der komplizierten Montage auf, weil die Latten der Unterkonstruktion neben den Durchgangsbohrungen für die Schraubenschäfte mit abgesetzten Bohrungen größeren Durchmessers versehen werden müssen, die der Aufnahme und Fixierung der buchsenförmigen Teile dienen.

Aufgabe der Erfindung ist es daher, eine Schraube der eingangs angegebenen Art zu schaffen, die sich bei einfacher Herstellung einfach und schnell montieren läßt.

Erfindungsgemäß wird diese Aufgabe bei einer Schraube der gattungsgemäßen Art durch die kennzeichnenden Merkmale des Patentanspruchs 1 gelöst.

Zur Montage der erfindungsgemäßen Schraube ist es lediglich erforderlich, die Latte der Unterkonstruktion mit einem Steinbohrer zu durchbohren, der gleichzeitig auch dem Bohren des Dübelloches dient. Die Schraube wird durch das buchsenförmige Teil hindurch in den in das Dübelbohrloch eingeführten Dübel gesteckt und eingedreht. Da die Bohrung des buchsenförmigen Teils mindestens so groß ist wie der äußere Durchmesser des Schraubengewindes, läßt sich die Schraube mühelos durch das buchsenförmige Teil bis zum Dübel hindurchschieben. Dort greift sie dann ein und schneidet sich in diesen bei gleichzeitigem Andruck an die Bohrwand der Mauer ein. Hat der geriffelte Schaft, der in seinem Durchmesser größer ist als das Schraubgewinde und ebenfalls größer ist als die Bohrung des buchsenförmigen Teils, diese erreicht, wird diese durch das weitere Eindrehen der Schraube, was das Eindringen des geriffelten Schaftes in die Buchse bewirkt, in ihrem Durchmesser vergrößert, so daß sie sich mit ihren zahnförmigen scharfen äußeren Kanten in die Wandung der Bohrung des Elements einschneidet. Dieser Eindruck- und Spreizvorgang wird in der letzten Phase des Einschraubens durch den kegelförmigen Schraubenkopf noch unterstützt. Wird nun die Schraube zum Zwecke der Justierung der Unterkonstruktion gegen den Uhrzeigersinn gedreht, so bewegt sich diese mit der fest verbundenen Unterkonstruktion von der Mauer weg, wodurch die Sollbruchstelle zwischen dem buchsenförmigen Teil und dem Dübel durchtrennt wird.

Vorteilhafte Ausgestaltungen der Erfindung sind Gegenstand der abhängigen Ansprüche.

Ein Ausführungsbeispiel der Erfindung wird nachstehend anhand der Zeichnung näher erläutert. In dieser zeigt

Fig. 1 einen Längsschnitt durch ein mit dem Dübel durch eine Sollbruchstelle verbundenes buchsenförmiges Teil und

Fig. 2 einen Schnitt durch eine zu der Einheit nach Fig. 1 gehörige Schraube.

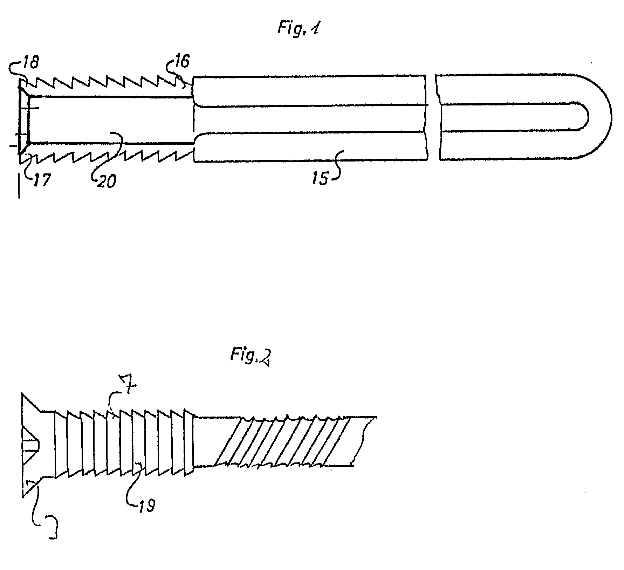

In Fig. 1 ist ein aus einem Kunststoffspritzgußteil bestehender Dübel 15 gezeigt, der durch eine Sollbruchstelle 16 mit dem buchsenförmigen Teil 17 verbunden ist. Das buchsenförmige Teil 17 weist auf seiner Außenseite eine sägezahnförmige Riffelung 18 auf.

Die zugehörige Schraube ist aus Fig. 2 ersichtlich. Der Schaft 19 der Schraube ist ebenfalls mit einer sägezahnförmigen Riffelung versehen, die aus sägezahnartigen Ringbunden 7 besteht, sich in die glatte Wandung des Durchgangsloches 20 des buchsenförmigen Teils 17 einschneidet und diese gegebenenfalls zusätzlich noch aufspreizt, so daß sich die Riffelung 18 in der Bohrung des Elements der Unterkonstruktion verklammern kann.

**Patentansprüche**

1. Schraube zur justierbaren Befestigung eines Elementes einer Unterkonstruktion o. dgl. an Wänden oder Decken mit einem mit mindestens einem Ringbund versehenen gewindefreien Schaft zwischen dem Schraubenkopf und dem Gewindeteil der Schraube und mit einem auf dem Gewindeteil aufgesteckten Dübel, dadurch gekennzeichnet, daß das dem gewindefreien Schaft (19) zugewandte Ende des Dübels (15) über eine Sollbruchstelle (16) mit einem in einer Bohrung des Elements befestigbaren buchsenförmigen Teil (17) verbunden ist, daß das buchsenförmige Teil (17) am gewindefreien Schaft (19 drehbar, aber axial unverschieblich festlegbar ist und daß der Durchmesser des buchsenförmigen Teils (17) mindestens so groß ist wie der des Dübels (15).

2. Schraube nach Anspruch 1, dadurch gekennzeichnet, daß der Schaft (19) in gleichen Abständen mit Ringbunden versehen ist.

3. Schraube nach Anspruch 2, dadurch gekennzeichnet, daß die Ringbunde (7) im Querschnitt Sägezahnform mit zum Schraubenkopf (3) hin ansteigenden Flanken aufweisen.

4. Schrauben nach einem der Ansprüche 1 bis 3, dadurch gekennzeichnet, daß der Schraubenkopf (3) kegelstumpfförmig mit dessen Oberseite bildender größerer Basisfläche ausgestaltet ist.

5. Schraube nach einem der Ansprüche 1 bis 4, dadurch gekennzeichnet, daß das buchsenförmige Teil (17) auf seiner Außenseite mit einer im Querschnitt sägezahnförmigen Riffelung mit zum Schraubenkopf (3) ansteigenden Flanken versehen ist.

6. Schraube nach einem der vorhergehenden Ansprüche, dadurch gekennzeichnet, daß das buchsenförmige Teil (17) mindestens in seinem mittleren Bereich mit längs verlaufenden Schlitzen versehen ist.

7. Schraube nach Anspruch 1, dadurch gekennzeichnet, daß der Schaft (19) einen größeren Durchmesser als das Gewindeteil und als das Durchgangsloch mit glatter Wandung des buchsenförmigen Teils (17) aufweist, dessen Durchmesser ebenfalls größer ist als der des Gewindeteils.

8. Schraube nach einem der vorhergehenden Ansprüche, dadurch gekennzeichnet, daß das buchsenförmige Teil (17) und der Dübel (15) aus Kunststoffspritzgußteilen bestehen.

**Claims**

1. A screw for the adjustable mounting of an element of a substructure or similar on walls or ceilings with a threadless screw shank between the screw head and the threaded portion of the screw, which screw shank is provided with at least one collar, and with a socket positioned on the threaded portion, characterized in that the end of the socket (15) facing the threadless shaft (19) is connected via a preset breaking point (16) with a sleeve-shaped part (17) which can be fixed in a bore of the element, that the sleeve-shaped part (17) can be mounted on the threadless shank (19) for rotation, but being axially fixed and that the diameter of the sleeve-shaped part (17) is at least as large as that of the socket (15).

2. A screw according to claim 1, characterized in that the shaft (19) is provided with collars at equidistant points.

3. A screw according to claim 2, characterized in that the collars (7) have flanks showing a saw-tooth shape in cross-section and rising towards the screw head (3).

4. A screw according to one of claims 1 to 3, characterized in that the screw head (3) has a frusto-conical shape with the larger base surface forming its top.

5. A screw according to one of claims 1 to 4, characterized in that the sleeve-shaped part (17) is provided on its outside with a serration having a saw-tooth shape in cross-section with flanks rising towards the screw head (3).

6. A screw according to one of the preceding claims, characterized in that the sleeve-shaped part (17) is provided at least in its median range with longitudinal slots.

7. A screw according to claim 1, characterized in that the shaft (19) has a larger diameter than the threaded portion and than the smooth-walled through bore of the sleeve-shaped part (17) whose diameter is also larger than that of the threaded portion.

8. A screw according to one of the preceding claims, characterized in that the sleeve-shaped part (17) and the socket (15) consists of synthetic injection moulded parts.

**Revendications**

1. Vis pour la fixation ajustable d'un élément d'une substructure ou élément semblable à des parois ou plafonds, comportant au moins une tige sans filet pourvue d'une collerette annulaire entre la tête de vis et la partie filetée de la vis, et une cheville placée sur la partie filetée, caractérisée en ce que l'extrémité de la cheville (15) orientée vers la partie de la tige sans filet (19) est reliée par l'intermédiaire d'un point de rupture programmé (16) avec une partie en forme de douille (17) pouvant être fixée dans l'alésage de l'élément, et que la partie en forme de douille (17) peut être fixée sur la tige non filetée (19) de manière à pouvoir pivoter mais immobile dans le sens axial et que le diamètre de la partie en forme de douille (17) est au moins aussi grand que celui de la cheville (15).

2. Vis selon la revendication 1, caractérisée en ce que la tige (19) est pourvue de collerettes annulaires espacés de manière régulière.

3. Vis selon la revendication 2, caractérisée en ce que les collerettes annulaires (7) présentent en coupe transversale une forme de dents de scie avec des flancs ascendants en direction de la tête de vis (3).

4. Vis selon les revendications 1 à 3, caractérisée en ce que la tête de vis (3) est formée de manière tronconique, son côté supérieur formant la surface de base plus grande.

5. Vis selon l'une des revendications 1 à 4, caractérisée en ce que la partie en forme de douille (17) présente sur son côté extérieur des flancs ascendants vers la tête de vis (3) avec un rainurage en forme de dents de scie en coupe transversale.

6. Vis selon l'une des revendications précédentes, caractérisée en ce que la partie en forme de douille (17) présente au moins dans sa zone moyenne des fentes dirigées longitudinalement.

7. Vis selon la revendication 1, caractérisée en ce que la tige (19) présente un diamètre supérieur à la partie filetée et au trou de passage avec paroi lisse de la partie en forme de douille (17) dont le diamètre est également supérieur à celui de la partie filetée.

8. Vis selon l'une des revendications précédentes, caractérisée en ce que la partie en forme de douille (17) et la cheville (15) consistent en pièces de plastique coulé sous pression.

Fig. 1

Fig. 2

EP 0 219 556 B1